# EUROPEAN PATENT SPECIFICATION

(11) **EP 2 583 397 B1**
(45) Date of publication and mention of the grant of the patent: **31.07.2019**
(21) Application number: 11798372.6
(22) Date of filing: 21.06.2011
(51) Int. Cl.: H04L 5/00, H04J 11/00, H04B 7/26

(54) **METHOD AND SYSTEM OF AGGREGATING COMPONENT CARRIERS ACROSS FREQUENCY BANDS**
VERFAHREN UND SYSTEM ZUR AGGREGATION VON KOMPONENTENTRÄGERN ZWISCHEN FREQUENZBÄNDERN
PROCÉDÉ ET SYSTÈME D'AGRÉGATION DE PORTEUSES COMPOSANTES ENTRE BANDES DE FRÉQUENCE

(30) Priority: 21.06.2010 IN 1737CH2010
(43) Date of publication of application: 24.04.2013
(73) Proprietor: Samsung Electronics Co., Ltd., Gyeonggi-do 443-742 (KR)
(72) Inventor: BAGHEL, Sudhir Kumar, Banglore 560093 (IN); VAN LIESHOUT, Gert-Jan, Staines Middlesex TW18 4QE (GB); JAIN, Nitin, Banglore 560093 (IN)
(74) Representative: Nederlandsch Octrooibureau
(86) International application number: PCT/KR2011/004531
(87) International publication number: WO 2011/162537

(56) References cited:
- EP-A1- 2 469 723
- EP-A2- 2 244 412
- WO-A2-2010/064858
- KR-A- 20100 052 646
- KR-A- 20100 058 399
- RESEARCH IN MOTION ET AL: "Support of Carrier Aggregation with Heterogeneous Deployment of Component Carriers", 3GPP DRAFT; R1-093289(RIM-CARRIER AGGREGATION FOR HETEROGENEOUS CARRIER DEPLOYMENT), 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Shenzhen, China; 20090818, 18 August 2009 (2009-08-18), XP050351614, [retrieved on 2009-08-18]
- INTERDIGITAL COMMUNICATIONS ET AL: "Further discussion on Component Carrier types", 3GPP DRAFT; R1-093887, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Miyazaki; 20091012, 12 October 2009 (2009-10-12), XP050388391, [retrieved on 2009-10-05]
- 3GPP: '3rd Generation Partnership Project; Technical Specification Group Radio Access Network; Further advancements for E-UTRA; LTE-Advanced feasibility studies in RAN WG4 (Release 9)' 3GPP TR 36.815 V9.0.0 March 2010, XP050402364 Retrieved from the Internet: <URL:http://www.33gpp.org/ftp/Specs/html-in fo/36815.htm> [retrieved on 2012-02-23]

## Description

### Technical Field

The present invention relates to the field of wireless communication, and more particularly relates to aggregating component carriers across frequency bands in a wireless network environment.

### Background Art

Wireless communication systems are widely deployed to provide various communication services such as voice, video, packet data, broadcast, messaging, and so on. These systems may be multiple-access systems capable of supporting communication for multiple users by sharing the available system resources.

Recently, in wireless communication technologies such as long term evolution (LTE)/LTE Advanced (LTE-A), carrier aggregation has been introduced such that two or more component carriers are aggregated in order to support wider transmission bandwidths up to 100MHz. Carrier aggregation technique enables to configure a user equipment to aggregate different number of cells comprising component carriers and of possibly different bandwidths in both uplink and downlink.

Different levels of carrier aggregation are possible based on availability of spectrum and traffic. It is known that downlink and uplink traffic load can differ significantly which necessitates requirement to deploy more DL carriers than UL carriers. Currently, an operator is allowed to deploy its network with more downlink component carriers than uplink component carriers present in the same frequency band. However, the operator is not allowed to crosslink a DL carrier from one frequency band with UL carrier from a different frequency band. If carrier aggregation allows cross-linking DL and UL carriers from different frequency bands, then the legacy user equipments need to be aware about such configuration. This is because the legacy user equipments may not have desired radio capability to operate on such cells.

Also, a cell cannot be aggregated as a standalone DL carrier from a specific frequency band even when there is no requirement of having an uplink carrier in the cell. When the cell is used as the DL carrier only, the UE may be unaware that the cell is having no uplink carrier and thus initiates idle mode procedures after camping on the cell.

WO 2010/064858 A2 discloses a method for carrier aggregation in a random access procedure, wherein mapping information is sent through DL component carriers, a random access preamble is sent through UL component carriers, and a random access response is sent through a specific DL component carrier specified in the mapping information.

EP 2 244 412 A2 discloses a method for carrier aggregation for informing a user equipment about a barred status of a cell or the end of a barred status of the cell, wherein the user equipment is informed by sending carrier configuration information.

### Disclosure of Invention

### Technical Problem

However, this may lead to failure conditions due to non-availability of uplink carrier in the cell.

### Solution to Problem

A method of aggregating downlink (DL) carriers across frequency bands comprising: aggregating a DL carrier of a first cell associated with a first frequency band with a uplink (UL) carrier of a second cell associated with a second band, wherein the first cell comprises aggregated downlink carrier and an unused uplink carrier; communicating cross-linking information for carrier aggregation of the DL carrier of the first frequency band with the UL carrier of the second frequency band to a plurality of user equipments; and performing data transfer with each of the plurality of user equipments using the aggregated DL carrier of the first frequency band and the UL carrier of the second frequency band.

A method of aggregating downlink (DL) carriers across different frequency bands comprising: aggregating a DL carrier of a cell associated with a frequency band in order to operate as a standalone DL carrier; communicating standalone information associated with the DL carrier of the frequency band; and performing data transfer with each of the plurality of user equipments using the aggregated DL carrier of the frequency band.

An apparatus comprising: a processor; and memory coupled to the processor and configured to temporarily store instructions, that when executed by the processor, result in performing a method comprising: aggregating a downlink (DL) carrier of a first cell associated with a first frequency band with a uplink (UL) carrier of a second cell associated with a second band, wherein the first cell comprises aggregated downlink carrier and an unused uplink carrier; providing cross-linking information associated with the DL carrier of the first frequency band aggregated with the UL carrier of the second frequency band to a plurality of user equipments; and communicating data with each of the plurality of user equipments using the aggregated DL carrier of the first frequency band and the UL carrier of the second frequency band.

An apparatus comprising: a processor; and memory coupled to the processor and configured to temporarily store instructions, that when executed by the processor, result in performing a method comprising: aggregating a downlink (DL) carrier of a cell associated with a frequency band in order to operate as a standalone DL carrier; providing standalone information associated with the DL carrier of the frequency band to a plurality of user equipments; and communicating data with each of the plurality of user equipments using the aggregated DL carrier of the frequency band.

### Brief Description of Drawings

Figure 1 illustrates a block diagram of a wireless communication system for aggregating component carriers across frequency bands, according to one embodiment.
Figure 2 is a process flowchart illustrating an exemplary method for aggregating downlink (DL) carrier in a standalone manner, according to one embodiment.
Figure 3 is a process flowchart illustrating an exemplary method for aggregating DL carrier in a cross-linked manner, according to one embodiment.
Figures 4 and 5 illustrate a schematic representation of aggregating downlink carrier in a standalone and cross-linked manner, according to one embodiment.
Figure 6 is a block diagram of a base station showing various components for implementing embodiments of the present subject matter.

### Mode for the Invention

The present invention provides a method and system for aggregating component carriers across frequency bands. In the following detailed description of the embodiments of the invention, reference is made to the accompanying drawings that form a part hereof, and in which are shown by way of illustration specific embodiments in which the invention may be practiced. These embodiments are described in sufficient detail to enable those skilled in the art to practice the invention, and it is to be understood that other embodiments may be utilized and that changes may be made without departing from the scope of the present invention. The following detailed description is, therefore, not to be taken in a limiting sense, and the scope of the present invention is defined only by the appended claims.

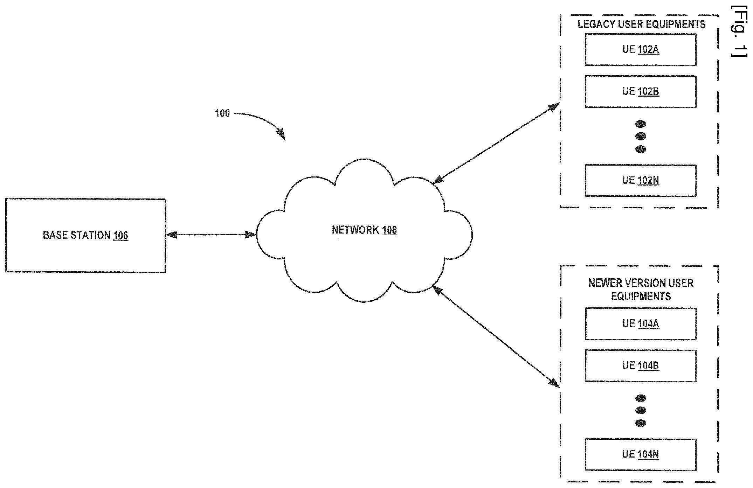

Figure 1 illustrates a block diagram of a wireless communication system 100 for aggregating component carriers across frequency bands, according to one embodiment. In Figure 1, the wireless communication system 100 includes a set of legacy user equipments 102A-N, a set of newer version of user equipments 104A-N and a base station 106 connected to the user equipments 102A-N and 104A-N via a network 108. For example, in the long term evolution (LTE) technology, the legacy user equipments 102A-N includes user equipments which support release 8 and release 9 version of LTE system, whereas the newer version of user equipments are devices associated with release 10 or higher version of LTE system that support cross-linking of component carriers.

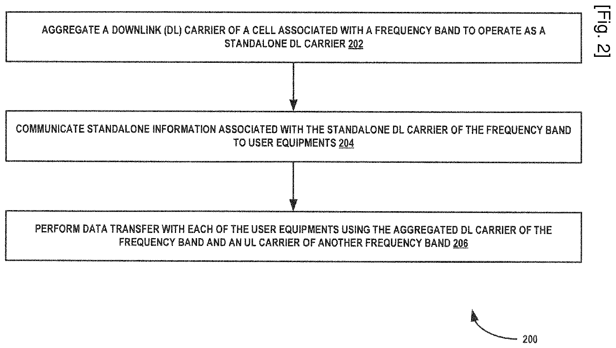

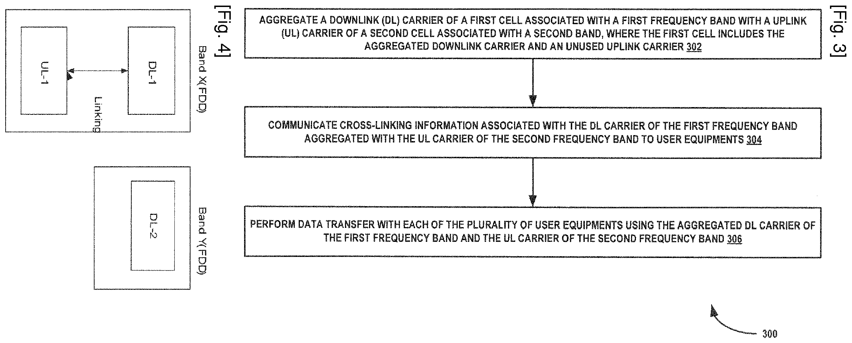

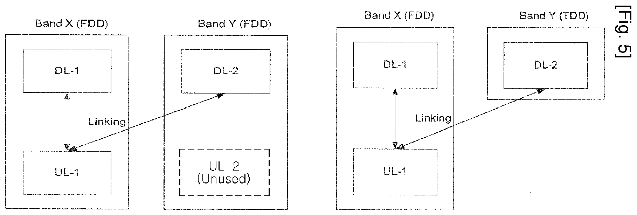

According to the present invention, the base station 106 enables network operators to asymmetrically aggregate a downlink (DL) carrier of a frequency band. For example, the base station 106 enables aggregation of carriers when there is need to deploy more DL carriers than the UL carrier in a cell. In one embodiment, the base station 106 aggregates a DL carrier associated with a frequency band in a standalone manner as illustrated in Figure 4. In another embodiment, the base station 106 aggregates a DL carrier associated with a frequency band with an UL carrier associated with another frequency band in a cross-linked manner as illustrated in Figure 5. The process of aggregating one or more DL carriers across frequency bands in a standalone manner and a cross-linked manner is illustrated in Figures 2 and 3, respectively.

Figure 2 is a process flowchart 200 illustrating an exemplary method for aggregating DL carrier in a standalone manner, according to one embodiment. At step 202, a DL carrier of a standalone cell) associated with a frequency band is aggregated to operate as standalone downlink carrier. It is appreciated that the standalone cell includes only D1 carrier and does not include an UL carrier. The frequency band can be a dummy frequency band (e.g., FDD band) or a reused frequency band (e.g., FDD band or TDD band).

At step 204, standalone information associated with the aggregated DL carrier of the frequency band is communicated to one or more user equipments 102A-N and 104A-N. The standalone information includes a frequency band indicator, frequency band information, EARFCN value, and barred cell information. For example, the frequency band indicator includes a dummy band value indicating that the DL carrier of the frequency band is aggregated as a standalone DL carrier. The frequency band information indicates the frequency band associated with the DL and UL carriers. The EARFCN value corresponds to a special value not being currently used by any frequency band. By reading the EARFCN value, the user equipments 102A-N and 104A-N shall interpret that the value is associated with the standalone DL carrier and hence the UL frequency is not to be calculated. Also, the EARFCN value indicates that UL transmission for corresponding standalone DL carrier should happen through another cell (e.g., the second cell). The barred cell information indicates that the standalone cell is barred from camping by the legacy user equipments 102A-N.

In one embodiment, the standalone information is broadcasted to the legacy and newer version user equipments 102A-N and 104A-N by the standalone cell in MIB, SIB1 and/or SIB2. The user equipments 102A-N and 104A-N, upon receiving the standalone information, avoids camping on the standalone cell with the aggregated DL carrier in idle mode. This is achieved through communicating barred cell information in the SIB 1 and invalid EARFCN values in the SIB2, or not communicating information necessary for camping. Thus, when the user equipments 102A-N and 104A-N scan for a cell and finds the standalone cell (e.g., from the capability list, and from the dummy band value in the SIB1), the user equipments 102A-N and 104A-N ignore the standalone cell with aggregated DL carrier (if found) for camping by reading the barred cell information, or invalid EARFCN values in the broadcast message.

During the connected mode, the newer version user equipments 104A-N aggregates the DL carrier of the frequency band based on the dummy band value in the SIB1. In another embodiment, the base station 106 may send a dedicated message carrying the standalone information to subset of the newer version user equipments 104A-N. Accordingly, the subset of newer version user equipments 104A-N links the DL carrier of the first frequency band with the UL carrier of the second frequency band based on the standalone information received in the dedicated message.

Based on the above, at step 206, a data transfer is performed with subset or all of the user equipments 104A-N using the DL carrier associated with the frequency band and the UL carrier associated with another frequency band.

Figure 3 is a process flowchart 300 illustrating an exemplary method for aggregating a DL carrier in a cross-linked manner, according to one embodiment. At step 302, a DL carrier of a first cell associated with a first frequency band is aggregated with an UL carrier of a second cell associated with a second frequency band. The first cell includes only DL carrier and an unused UL carrier. The first frequency band can be a dummy frequency band (e.g., FDD band) or a reused frequency band (e.g., FDD band or TDD band).

At step 304, cross-linking information for carrier aggregation of the DL carrier of the first frequency band with the UL carrier of the second frequency band is communicated to one or more user equipments 102A-N and 104A-N. The cross-linking information includes a frequency band indicator (in SIB 1), frequency band information, EARFCN value, and barred cell information. For example, the frequency band indicator includes a dummy band value indicating that the DL carrier of the first frequency band is aggregated with the UL carrier of the second frequency band. The frequency band information indicates the frequency band associated with the DL and UL carriers. The EARFCN value corresponds to a special value not being currently used by any frequency band. By reading the EARFCN value, the user equipments 102A-N and 104A-N shall interpret that the value is associated with the aggregated DL carrier and hence the associated UL frequency is not to be calculated.

In one embodiment, the cross-linking information is broadcasted to the legacy and newer version user equipments 102A-N and 104A-N by the DL carrier in a MIB, SIB 1 and SIB2. The frequency band indicator is indicated in the SIB1 for cross-linking DL carrier with the UL carrier. In one exemplary implementation, the frequency band indicator avoids legacy user equipments 102A-N to camp on cross-linked DL carrier, whereas the newer version user equipments 104A-N can select the cross-linked DL carrier for camping. In another exemplary implementation, the frequency band indicator in the SIB 1 may indicate a frequency band value associated with the uplink carrier instead of DL carrier. It is appreciated that, enhancements in the legacy user equipments 102A-N can enables the user equipments 102A-N to support cross-linked DL carriers.

Also, the SIB2 carries the EARFCN corresponding to the UL carrier such that the newer version user equipments 104A-N can unambiguously determine the second frequency band associated with the UL carrier from the EARFCN value. It can be noted that, the second frequency band associated with the UL carrier can be determined based on the EARFCN value as the EARFCN numbers are non-overlapping across frequency bands. Moreover, the SIB2 include the release 10 specific extension indicating the first frequency band associated with the aggregated DL carrier. Thus, the newer version user equipments 104A-N can interpret the first frequency band fro the extension and calculate the DL frequency using techniques well known to the person skilled in the art. In another approach, the release 10 specific extension may be included in the SIB 1 to indicate asymmetric operation.

The legacy user equipments 102A-N, upon receiving the cross-linking information, avoids camping on the first cell with the aggregated DL carrier in idle mode and connected mode. This is achieved through communicating barred cell information, and invalid EARFCN values or not communicating information necessary for camping. Thus, when the legacy user equipments 102A-N scan for a cell and finds the first cell, the legacy user equipments 102A-N ignore a first cell with aggregated DL carrier (if found) for camping by reading the barred cell information, or invalid EARFCN values in the broadcast message.

On the other hand, the newer version user equipments 104A-N, upon reading the broadcast message, camps on the first cell with the aggregated DL carrier. In the connected mode, the newer version user equipments 104A-N cross links the DL carrier of the first frequency band with the UL carrier of the second frequency band based on the cross-linking information received in the broadcast message. In another embodiment, the base station 106 may send a dedicated message carrying the cross-linking information to subset of the newer version user equipments 104A-N. Accordingly, the subset of newer version user equipments 104A-N cross links the DL carrier of the first frequency band with the UL carrier of the second frequency band based on the cross-linking information received in the dedicated message.

Based on the above, at step 306, a data transfer is performed with subset or all of the user equipments 104A-N using the DL carrier associated with the first frequency band and the UL carrier associated with the second frequency band.

Figures 4 and 5 illustrate a schematic representation of aggregating downlink carrier in a standalone and cross-linked manner, according to one embodiment. In Figure 4, a DL carrier in Band Y is aggregated in a standalone manner. This means that, the newer version user equipments 104A-N can receive downlink data through the DL carrier of Band Y and send uplink data through the UL carrier of Band X. In Figure 5, a DL carrier in Band Y is cross linked with an UL carrier of Band X, while an UL carrier of the Band Y is unused. This means that, the newer version user equipments 104A-N can receive downlink data through the DL carrier of Band Y and send uplink data through the UL carrier of Band X. In another approach, the Band Y such as TDD band having a single carrier used as additional downlink carrier and is aggregated with the UL carrier of Band X.

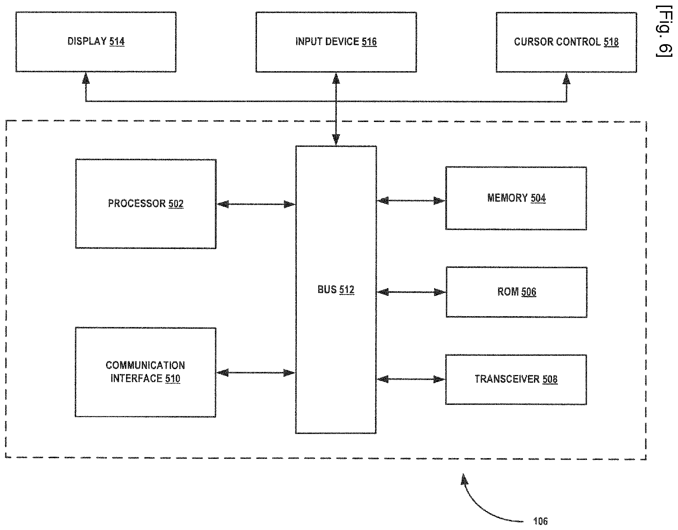

Figure 6 is a block diagram of the base station 106 showing various components for implementing embodiments of the present subject matter. In Figure 6, the base station 106 includes a processor 502, memory 504, a read only memory (ROM) 506, a transceiver 508, a bus 510, a communication interface 512, a display 514, an input device 516, and a cursor control 518.

The processor 502, as used herein, means any type of computational circuit, such as, but not limited to, a microprocessor, a microcontroller, a complex instruction set computing microprocessor, a reduced instruction set computing microprocessor, a very long instruction word microprocessor, an explicitly parallel instruction computing microprocessor, a graphics processor, a digital signal processor, or any other type of processing circuit. The processor 502 may also include embedded controllers, such as generic or programmable logic devices or arrays, application specific integrated circuits, single-chip computers, smart cards, and the like.

The memory 504 and the ROM 506 may be volatile memory and non-volatile memory. The memory 504 includes instructions temporarily stored therein for aggregating component carriers across frequency bands, according to one or more embodiments described above. A variety of computer-readable storage media may be stored in and accessed from the memory elements. Memory elements may include any suitable memory device(s) for storing data and machine-readable instructions, such as read only memory, random access memory, erasable programmable read only memory, electrically erasable programmable read only memory, hard drive, removable media drive for handling compact disks, digital video disks, diskettes, magnetic tape cartridges, memory cards, Memory Sticks™, and the like.

Embodiments of the present subject matter may be implemented in conjunction with modules, including functions, procedures, data structures, and application programs, for performing tasks, or defining abstract data types or low-level hardware contexts. Machine-readable instructions stored on any of the above-mentioned storage media may be executable by the processor 502. For example, a computer program may include machine-readable instructions capable of aggregating component carrier across bands, according to the teachings and herein described embodiments of the present subject matter. In one embodiment, the program may be included on a compact disk-read only memory (CD-ROM) and loaded from the CD-ROM to a hard drive in the non-volatile memory. The machine-readable instructions may cause the base station 106 to encode according to the various embodiments of the present subject matter.

The transceiver 508 may be capable of communicating cross-linking/standalone information and perform data transfer with the user equipments using the aggregated DL carrier from a frequency band and a UL carrier of another frequency band. The bus 510 acts as interconnect between various components of the base station 106. The components such as communication interfaces 512, the display 514, the input device 516, and the cursor control 518 are well known to the person skilled in the art and hence the explanation is thereof omitted.

Although, the above described methods and system describes aggregation of the DL carrier(s) in a standalone and cross-linked manner, one can envision that UL link carrier can also be aggregated in a standalone and cross-linked fashion as per foregoing description.

The present embodiments have been described with reference to specific example embodiments, it will be evident that various modifications and changes may be made to these embodiments without departing from the broader scope of the various embodiments. Furthermore, the various devices, modules, selectors, estimators, and the like described herein may be enabled and operated using hardware circuitry, for example, complementary metal oxide semiconductor based logic circuitry, firmware, software and/or any combination of hardware, firmware, and/or software embodied in a machine readable medium. For example, the various electrical structure and methods may be embodied using transistors, logic gates, and electrical circuits, such as application specific integrated circuit.

## Claims

1. A method of aggregating downlink, DL, carriers across different frequency bands, the method comprising:
aggregating a DL carrier of a first cell associated with a first frequency band with an uplink, UL, carrier of a second cell associated with a second frequency band, wherein the first cell includes an aggregated downlink carrier and an unused uplink carrier;
providing cross-linking information associated with the DL carrier of the first frequency band aggregated with the UL carrier of the second frequency band to a plurality of user equipments; and
communicating data with each of the plurality of user equipments using the aggregated DL carrier of the first frequency band and the UL carrier of the second frequency band;
wherein the cross-linking information includes a frequency band indicator, frequency band information, an evolved universal terrestrial radio access absolute radio frequency channel number, EARFCN, and barred cell information,
wherein the EARFCN has a value of an EARFCN channel number not being currently used by any frequency band and which is associated with the DL carrier and informs the user equipments that the UL frequency is not to be calculated.

2. The method of claim 1, wherein the plurality of user equipments includes legacy user equipment (102A) and newer version user equipment (104A) being different from the legacy user equipment.

3. The method of claim 2, wherein providing the cross-linking information associated with the DL carrier of the first frequency band aggregated with the UL carrier of the second frequency band to the plurality of user equipments further comprises:
broadcasting the cross-linking information to the legacy user equipment and the newer version equipment so that the legacy user equipment avoids camping on the first cell associated with the aggregated DL carrier during an idle mode based on the cross-linking information, wherein the newer version user equipment camps on the first cell associated with the aggregated DL carrier during an idle mode, and the newer version user equipment links the DL carrier of the first frequency band and the UL carrier of the second frequency band during connected mode based on the cross-linking information.

4. The method of claim 2, wherein providing the cross-linking information associated with the DL carrier of the first frequency band aggregated with the UL carrier of the second frequency band to the plurality of user equipments further comprises:
communicating the cross-linking information to the newer version user equipment via dedicated signalling so that the the newer version user equipment links the DL carrier of the first frequency band and the UL carrier of the second frequency band during connected mode using the cross-linking information.

5. The method of claim 2, wherein the frequency band indicator includes a dummy band value indicating that the DL carrier of the first frequency band is aggregated with the UL carrier of the second frequency band.

6. A method of aggregating downlink, DL, carriers across different frequency bands, the method comprising:
aggregating a DL carrier of a cell associated with a frequency band in order to operate as a standalone DL carrier;
providing standalone information associated with the DL carrier of the frequency band to a plurality of user equipments; and
communicating data with each of the plurality of user equipments using the aggregated DL carrier of the frequency band;
wherein the standalone information includes a frequency band indicator, frequency band information, an evolved universal terrestrial radio access absolute radio frequency channel number, EARFCN, and barred cell information;
wherein the EARFCN has a value of an EARFCN channel number not being used by any frequency band and which is associated with the DL carrier and informs the user equipments that the UL frequency is not to be calculated.

7. The method of claim 6, wherein the plurality of user equipments includes legacy user equipment and newer version user equipment being different from the legacy user equipment.

8. The method of claim 7, wherein providing the standalone information associated with the DL carrier of the frequency band comprises:
broadcasting the standalone information associated with the DL carrier of the frequency band to the legacy user equipment and the newer version user equipment so that the legacy user equipment and the newer version user equipment avoid camping on the cell associated with the aggregated DL carrier during an idle mode based on the standalone information, and
the newer version user equipment can aggregates the DL carrier of the frequency band during connected mode.

9. The method of claim 6, wherein the frequency band indicator includes a dummy band value indicating the standalone DL carrier of the frequency band.

10. The method of claim 1 or 6, wherein the first frequency band includes a dummy frequency band or a re-used frequency band.

11. The method of claim 10, wherein the dummy frequency band is a Frequency Division Duplexing, FDD, band.

12. The method of claim 10, wherein the re-used frequency band is selected from the group consisting of a FDD band and a Time Division Duplexing, TDD, band.

13. An apparatus comprising:
a transceiver (508);
a memory (504); and
a processor (502) coupled to the transceiver and the memory (504),
wherein the processor is adapted to perform the method of one of claims 1 to 5.

14. An apparatus comprising:
a transceiver (508);
a memory (504); and
a processor (502) coupled to the transceiver and the memory (504),
wherein the processor is adapted to perform the method of one of claims 6 to 12.

## Patentansprüche

1. Verfahren zur Aggregation von Downlink-DL-Trägern über verschiedene Frequenzbänder, wobei das Verfahren Folgendes umfasst:
Aggregation eines DL-Trägers einer ersten Zelle, die einem ersten Frequenzband zugeordnet ist, mit einem Uplink-UL-Träger einer zweiten Zelle, die einem zweiten Frequenzband zugeordnet ist, wobei die erste Zelle einen aggregierten Downlinkträger und einen nicht verwendeten Uplinkträger umfasst;
Bereitstellen von Vernetzungsinformationen, die dem DL-Träger des ersten Frequenzbandes zugeordnet sind, das mit dem UL-Träger des zweiten Frequenzbandes aggregiert ist, für eine Vielzahl von Benutzergeräten; und
Übertragen von Daten mit jeder der Vielzahl von Benutzergeräten unter Verwendung des aggregierten DL-Trägers des ersten Frequenzbandes und des UL-Trägers des zweiten Frequenzbandes;
wobei die Vernetzungsinformationen einen Frequenzbandindikator, Frequenzbandinformationen, eine EARFCN (evolved Universal Terrestrial Radio Access Absolute Radio Frequency Channel Number) und gesperrte Zelleninformationen umfassen,
wobei die EARFCN einen Wert einer EARFCN Kanalnummer aufweist, die derzeit von keinem Frequenzband verwendet wird und dem DL-Träger zugeordnet ist, und die Benutzergeräte informiert, dass die UL-Frequenz nicht berechnet werden soll.

2. Verfahren nach Anspruch 1, wobei die Vielzahl von Benutzergeräten ältere Benutzergeräte (102A) und Benutzergeräte mit neuerer Version (104A) umfasst, die sich von den älteren Benutzergeräten unterscheiden.

3. Verfahren nach Anspruch 2, wobei das Bereitstellen der Vernetzungsinformationen, die dem DL-Träger des ersten Frequenzbandes zugeordnet sind, das mit dem UL-Träger des zweiten Frequenzbandes aggregiert ist, für eine Vielzahl von Benutzergeräten des Weiteren Folgendes umfasst:
Übertragen der Vernetzungsinformationen an das ältere Benutzergerät und an das Gerät mit der neueren Version, so dass das ältere Benutzergerät es vermeidet, sich auf die erste Zelle zu installieren, die dem aggegierten DL-Träger während eines Leerlaufmodus zugeordnet ist, basierend auf den Vernetzungsinformationen, wobei neuere Benutzergerät sich mit der neueren Version such auf die erste Zelle installiert, die dem aggregierten DL-Träger während eines Leerlaufmodus zugeordnet ist, und das Benutzergerät mit der neueren Version den DL-Träger des ersten Frequenzbandes und den UL-Träger des zweiten Frequenzbandes verbindet während des verbundenen Modus auf der Grundlage der Vernetzungsinformationen.

4. Verfahren nach Anspruch 2, wobei das Bereitstellen der Vernetzungsinformationen, die dem DL-Träger des ersten Frequenzbandes zugeordnet sind, das mit dem UL-Träger des zweiten Frequenzbandes aggregiert ist, für eine Vielzahl von Benutzergeräten des Weiteren Folgendes umfasst:
Übertragen der Vernetzungsinformationen an das Benutzergerät mit der neueren Version mittels dedizierter Signalisierung, so dass das Benutzergerät mit der neueren Version den DL-Träger des ersten Frequenzbandes und den UL-Träger des zweiten Frequenzbandes im Verbindungsmodus unter der Verwendung der Vernetzungsinformationen verbindet.

5. Verfahren nach Anspruch 2, wobei der Frequenzbandanzeiger einen Scheinsignal-Bandwert umfasst, der anzeigt, dass der DL-Träger des ersten Frequenzbandes mit dem UL-Träger des zweiten Frequenzbandes aggregiert ist.

6. Verfahren zur Aggregation von Downlink-DL-Trägern über verschiedene Frequenzbänder, wobei das Verfahren Folgendes umfasst:
Aggregation eines DL-Trägers einer Zelle, die einem Frequenzband zugeordnet ist, um als eigenständiger DL-Träger zu arbeiten;
Bereitstellen von eigenständigen Informationen, die dem DL-Träger des Frequenzbandes zugeordnet sind, für eine Vielzahl von Benutzergeräten; und
Übertragen von Daten mit jeder der Vielzahl von Benutzergeräten unter Verwendung des aggregierten DL-Trägers des Frequenzbandes;
wobei die eigenständigen Informationen einen Frequenzbandindikator, Frequenzbandinformationen, eine EARFCN (evolved Universal Terrestrial Radio Access Absolute Radio Frequency Channel Number) und gesperrte Zelleninformationen umfassen;
wobei die EARFCN einen Wert einer EARFCN Kanalnummer aufweist, die von keinem Frequenzband verwendet wird und dem DL-Träger zugeordnet ist, und die Benutzergeräte informiert, dass die UL-Frequenz nicht berechnet werden soll.

7. Verfahren nach Anspruch 6, wobei die Vielzahl von Benutzergeräten ältere Benutzergeräte und Benutzergeräte mit der neueren Version umfasst, die sich von den älteren Benutzergeräten unterscheiden.

8. Verfahren nach Anspruch 7, wobei das Bereitstellen der eigenständigen Informationen, die dem DL-Träger des Frequenzbandes zugeordnet sind, Folgendes umfasst:
Übertragen der eigenständigen Informationen die dem DL-Träger des Frequenzbandes zugeordnet sind, an das ältere Benutzergerät und an das Benutzergerät mit der neueren Version, so dass das ältere Benutzergerät und das Benutzergerät mit der neueren Version es vermeiden, sich auf die Zelle zu installieren, die dem aggregierten DL-Träger während eines Leerlaufmodus zugeordnet ist, basierend auf den eigenständigen Informationen, und
das Benutzergerät mit der neueren Version kann den DL-Träger des Frequenzbandes im verbundenen Modus aggregieren.

9. Verfahren nach Anspruch 6, wobei der Frequenzbandanzeiger einen Scheinsignal-Bandwert umfasst, der den eigenständigen DL-Träger des Frequenzbandes anzeigt.

10. Verfahren nach Anspruch 1 oder 6, wobei das erste Frequenzband ein Scheinfrequenzband oder ein wiederverwendetes Frequenzband umfasst.

11. Verfahren nach Anspruch 10, wobei das Scheinfrequenzband ein Frequenz-Duplex(FDD)-Band ist.

12. Verfahren nach Anspruch 10, wobei das wiederverwendete Frequenzband aus folgender Gruppe ausgewählt wird, die aus einem FDD-Band und einem Zeit-Duplexbetrieb (TDD)-Band besteht.

13. Vorrichtung, umfassend:
einen Transceiver (508);
einen Speicher (504); und
einen Prozessor (502), der mit dem Transceiver und dem Speicher (504) gekoppelt ist,
wobei der Prozessor dazu eingerichtet ist, das Verfahren nach einem der Ansprüche 1 bis 5 auszuführen.

14. Vorrichtung, umfassend:
einen Transceiver (508);
einen Speicher (504); und
einen Prozessor (502), der mit dem Transceiver und dem Speicher (504) gekoppelt ist,
wobei der Prozessor dazu eingerichtet ist, das Verfahren nach einem der Ansprüche 6 bis 12 auszuführen.

## Revendications

1. Procédé d'agrégation de porteuses de liaison descendante, DL, entre différentes bandes de fréquences, le procédé comprenant :
agréger une porteuse de DL d'une première cellule associée à une première bande de fréquences avec une porteuse de liaison montante, UL, d'une deuxième cellule associée à une deuxième bande de fréquences, où la première cellule comprend une porteuse de liaison descendante agrégée et une porteuse de liaison montante inutilisée ;
fournir des informations de liaison croisée associées à la porteuse de DL de la première bande de fréquences agrégée à la porteuse d'UL de la deuxième bande de fréquences à une pluralité d'équipements d'utilisateur ; et
communiquer des données avec chacun des équipements de la pluralité d'équipements d'utilisateur en utilisant la porteuse de DL agrégée de la première bande de fréquences et la porteuse d'UL de la deuxième bande de fréquences ;
où l'information de liaison croisée comprend un indicateur de bande de fréquences, une information de bande de fréquences, un numéro de canal de fréquence radio absolu d'accès radio terrestre universel évolué, EARFCN, et une information de cellule interdite,
où l'EARFCN a une valeur d'un numéro de canal EARFCN qui n'est actuellement utilisé par aucune bande de fréquences et qui est associé à la porteuse de DL et qui informe les équipements d'utilisateur que la fréquence d'UL ne doit pas être calculée.

2. Procédé selon la revendication 1, où la pluralité d'équipements d'utilisateur comprend un équipement d'utilisateur existant (102A) et un équipement d'utilisateur d'une version plus récente (104A) étant différent de l'équipement d'utilisateur existant.

3. Procédé selon la revendication 2, où la fourniture des informations de liaison croisée associées à la porteuse de DL de la première bande de fréquences agrégée à la porteuse d'UL de la deuxième bande de fréquences à la pluralité d'équipements d'utilisateur comprend en outre :
diffuser les informations de liaison croisée à l'équipement d'utilisateur existant et à l'équipement de version plus récente de sorte que l'équipement d'utilisateur existant évite se domicilier sur la première cellule associée à la porteuse de DL agrégée pendant un mode inactif sur la base des informations de liaison croisée, où l'équipement d'utilisateur de version plus récente se domicilie sur la première cellule associée à la porteuse de DL agrégée pendant un mode inactif, et l'équipement d'utilisateur de version plus récente relie la porteuse de DL de la première bande de fréquences et la porteuse d'UL de la deuxième bande de fréquences pendant le mode connecté sur la base des informations de liaison croisée.

4. Procédé selon la revendication 2, où la fourniture des informations de liaison croisée associées à la porteuse de DL de la première bande de fréquences agrégée à la porteuse d'UL de la deuxième bande de fréquences à la pluralité d'équipements d'utilisateur comprend en outre :
communiquer les informations de liaison croisée à l'équipement d'utilisateur de version plus récente via une signalisation dédiée de sorte que l'équipement d'utilisateur de version plus récente relie la porteuse de DL de la première bande de fréquences et la porteuse d'UL de la deuxième bande de fréquences pendant le mode connecté à l'aide des informations de liaison croisée.

5. Procédé selon la revendication 2, où l'indicateur de bande de fréquences comprend une valeur de bande fictive qui indique que la porteuse de DL de la première bande de fréquences est agrégée à la porteuse d'UL de la deuxième bande de fréquences.

6. Procédé d'agrégation de porteuses de liaison descendante, DL, entre différentes bandes de fréquence, le procédé comprenant :
agréger une porteuse de DL d'une cellule associée à une bande de fréquences afin de fonctionner en tant que porteuse de DL autonome ;
fournir des informations autonomes associées à la porteuse de DL de la bande de fréquences à une pluralité d'équipements d'utilisateur ; et
communiquer des données à chacun de la pluralité d'équipements d'utilisateur en utilisant la porteuse de DL agrégée de la bande de fréquences ;
où les informations autonomes comprennent un indicateur de bande de fréquences, une information de bande de fréquences, un numéro de canal de fréquence radio absolu d'accès radio terrestre universel évolué, EARFCN, et une information de cellule interdite ;
où l'EARFCN a une valeur d'un numéro de canal EARFCN qui n'est utilisée par aucune bande de fréquences et qui est associée à la porteuse de DL et qui informe les équipements d'utilisateur que la fréquence d'UL ne doit pas être calculée.

7. Procédé selon la revendication 6, où la pluralité d'équipements d'utilisateur comprend un équipement d'utilisateur existant et un équipement d'utilisateur de version plus récente étant différent de l'équipement d'utilisateur existant.

8. Procédé selon la revendication 7, où la fourniture des informations autonomes associées à la porteuse de DL de la bande de fréquences comprend :
diffuser les informations autonomes associées à la porteuse de DL de la bande de fréquences à l'équipement d'utilisateur existant et à l'équipement d'utilisateur de version plus récente de sorte que l'équipement d'utilisateur existant et l'équipement d'utilisateur de version plus récente évitent se domicilier sur la cellule associée à la porteuse de DL agrégée en mode inactif sur la base des informations autonomes, et
l'équipement d'utilisateur de version plus récente peut agréger la porteuse de DL de la bande de fréquences en mode connecté.

9. Procédé selon la revendication 6, où l'indicateur de bande de fréquences comprend une valeur de bande fictive qui indique la porteuse de DL autonome de la bande de fréquences.

10. Procédé selon la revendication 1 ou 6, où la première bande de fréquences comprend un bande de fréquences fictive ou une bande de fréquences réutilisée.

11. Procédé selon la revendication 10, où la bande de fréquences fictive est une bande de duplexage par répartition en fréquence, FDD.

12. Procédé selon la revendication 10, où le bande de fréquences réutilisée est sélectionnée dans le groupe comprenant une bande de FDD et une bande de duplexage par répartition dans le temps, TDD.

13. Dispositif comprenant :
un émetteur-récepteur (508) ;
une mémoire (504) ; et
un processeur (502) accouplé à l'émetteur-récepteur et à la mémoire (504),
où le processeur est adapté pour effectuer le procédé selon l'une des revendications 1 à 5.

14. Dispositif comprenant :
un émetteur-récepteur (508) ;
une mémoire (504) ; et
un processeur (502) accouplé à l'émetteur-récepteur et à la mémoire (504),
où le processeur est adapté pour effectuer le procédé selon l'une des revendications 6 à 12.
